# EUROPEAN PATENT SPECIFICATION

(11) **EP 1 690 383 B1**
(45) Date of publication and mention of the grant of the patent: **15.10.2008**
(21) Application number: 04810352.7
(22) Date of filing: 05.11.2004
(51) Int. Cl.: H04L 12/56, H04L 12/24

(54) **DISTRIBUTED CONTROL PLANE ARCHITECTURE FOR NETWORK ELEMENTS**
VERTEILTE STEUEREBENENARCHITEKTUR FÜR NETZWERKELEMENTE
ARCHITECTURE DE PLAN DE COMMANDE REPARTI POUR ELEMENTS DE RESEAU

(30) Priority: 13.11.2003 US 713237
(43) Date of publication of application: 16.08.2006
(73) Proprietor: Intel Corporation, Santa Clara, CA 95052 (US)
(72) Inventor: BAKSHI, Sanjay, Beaverton, OR 97006 (US); AHMED, Suhail, Beaverton, OR 97006 (US); DEVAL, Manasi, Beaverton, OR 97007 (US); KHOSRAVI, Hormuzd, Portland, OR 97229 (US); MURALIDHAR, Rajeev, Santa Clara, CA 95050 (US)
(74) Representative: Dunlop, Hugh Christopher
(86) International application number: PCT/US2004/036833
(87) International publication number: WO 2005/050932

(56) References cited:
- US-A1- 2003 123 457
- US-A1- 2003 128 668
- MANASI DEVAL, HORMUZD KHOSRAVI: "Distributed Control Plane Architecture for Network Elements" INTEL TECHNOLOGY JOURNAL, [Online] XP002317953 14-11-2003 ISSN: 1535-864 Intel Technology Journal Retrieved from the Internet: URL:http://developer.intel.com/technology/ itj/2003/volume07issue04/art05_control_pla ne/p01_abstract.htm> [retrieved on 2005-03-04]

## Description

### BACKGROUND

As the popularity of the Internet and other networks grows, the link bandwidth has grown from megabit rates to gigabit rates, and new protocols have been introduced to support new services being deployed on the Internet. The growth of new protocols and their related control traffic increases the overhead of a network. This may lead to three areas of difficulty with a protocol: scalability, highly available protocols, and robustness to control plane denial of service (DoS) attacks.

The addition of new devices and protocols increase the number of interfaces in a network element. The protocol generates more control traffic because it has to communicate with an increasing number of peers via many different interfaces. New services introduced in the network increase control traffic by either adding new types of control traffic or introducing new control protocols. This leads to increased complexity and traffic volume in the control plane, such as on the control card for the network element. This impedes network and network element scalability.

The growing use of real-time services such as network telephony, video and audio distribution, has resulting in a higher need for constant connectivity. The loss of a link for even a second can result in a loss of a considerable amount of information. An event such as a link failing will trigger huge amounts of processing related to the link event on the protocols executing on the control plane. This may saturate the control plane processor and render it nearly inoperational, causing the applications that need high availability to fail.

In another problem related to control plane saturation, DOS attack generally sends replicated or bogus packets to the control plane. The attack seeks to overwhelm the control plane by sending spoofed control packets for a particular protocol, such a Border Gateway Protocol (BGP). Because all of the control packets need to be authenticated, the control card is overwhelmed attempting to authenticate the packets. This interferes with the control plane processing of other tasks, resulting in the denial of service.

A rotated distributed implementation of control protocols is discussed in US 2003/0128668.

### BRIEF DESCRIPTION OF THE DRAWINGS

The invention may be best understood by reading the disclosure with reference to the drawings, wherein:
Figure 1 is a block diagram of an embodiment of a network topology.
Figure 2 is a block diagram of an embodiment of a distributed network element.
Figure 3 is a block diagram of embodiments of two distributed control plane architecture control points.
Figure 4 is a flowchart of an embodiment to provide distributed control plane processing.
Figure 5 is a flowchart of an embodiment of a method for providing a distributed control plane architecture enabled network element
Figure 6 is a flowchart of an embodiment of a method to establish initial connection for a controller control plane protocol module.
Figure 7 is a flowchart of an embodiment of a method to establish initial connection for a worker control plane protocol module.

### DETAILED DESCRIPTION OF THE EMBODIMENTS

The present invention is defined by the subject matter of the appended claims.

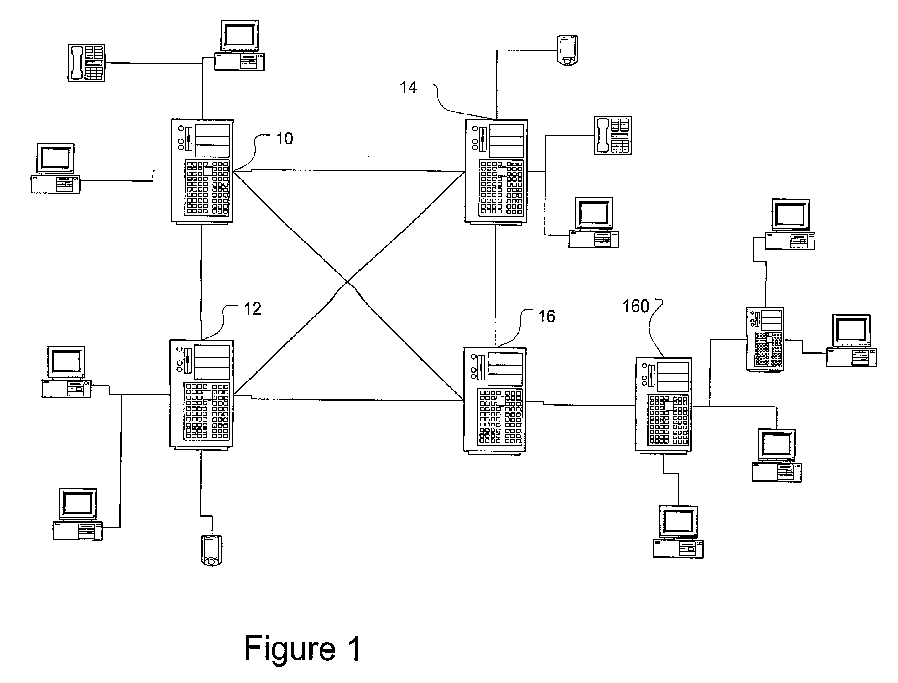

Figure 1 shows a topology of an embodiment of a network. Initially, the network may have been comprised of four devices or elements, such as 10, 12, 14 and 16, communicating between themselves. As has happened with the Internet and other large-scale networks, each of the network devices provides communication to more and more user devices. Eventually, the network devices may become communication points between networks, such as the network connected to network device 160. As networks grow, more and more devices need to communicate with each other. Further, the network devices 10, 12, 14 and 16, such as switches or routers, need to keep each other updated with the addition of more members to the network.

Similarly, as technology has evolved, more services have been added to the network. These new services require new protocols or extensions to existing protocols. The term protocol as used here means any routing or signaling protocol. In order to service the new protocols or the extensions, network devices need to add new interfaces. A typically network device in a current Internet Service Provider (ISP) may have hundreds of physical or virtual interfaces. The ISP network may have 300-500 network devices, resulting in a huge number of interfaces. This large number of interfaces per network element coupled with an increase in the volume and variety of control traffic for the new devices and services limits the scalability of the network because the control planes of the network devices become overwhelmed.

Each network device, or element, generally has three operational planes: control, forwarding and management. The control plane typically executes signaling, routing and other control protocols in addition to configuring the forwarding plane. The forwarding plane usually performs the packet processing operations such as IP forwarding or classification, at or close to line-rate, the speed of the connecting line. The forwarding plane typically consists of specialized application specific integrated circuits (ASICs) or programmable network processors. The control plane typically executes on a general-purpose processor. The management plane provides administrative interface into the overall system and may consist of both software executing on a general-purpose processor as well as probes and counters in the hardware.

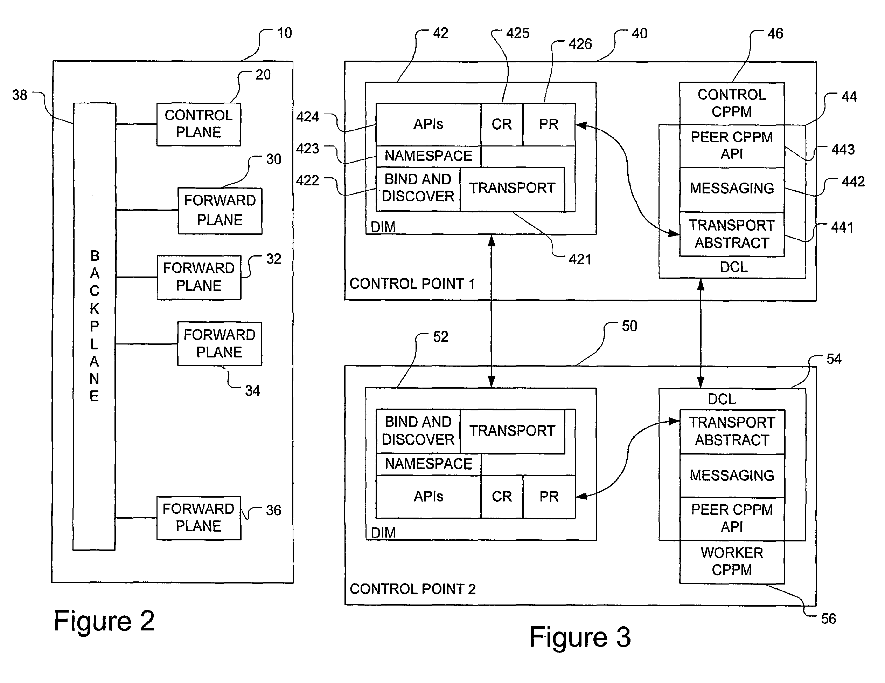

An example of a network device with control and forwarding planes is shown in Figure 2. The network device 10 has a control plane 20, and multiple forwarding planes 30, 32, 34 and 36. The control plane and the forwarding planes communicate with each other through a backplane 38. The backplane may be a physical backplane as is seen in a computer, with the control plane, or card, and the forwarding planes, or lines cards, all connected to the backplane. Additionally, the control plane and forwarding planes may not all physically reside on a physical backplane, but are connected through a backplane fabric, such as an Internet Protocol (IP) network, Asynchronous Transfer Mode (ATM), Ethernet, or some proprietary switching fabric. The backplane is used to transfer both control and data traffic between the planes.

The control plane processing is done in a centralized manner by the control card. The line cards, or forwarding planes, handle the media-specific processing and line-rate packet processing. The separation of processing tasks between the control and forwarding planes has advantages in that each can scale independently, and different components from different vendors can be used to build each plane because of the use of a standardized inter-plane interface, such as the Network Processing Forum application program interface.

This distributed processing architecture shown in Figure 2 allows the use of a distributed control plane architecture that can be used to distribute functionality of complex control plane protocols between different processing elements in network devices. Prior to embodiments of this invention, this type of distributed processing could not be accomplished because of the difficult of maintaining connectivity and tracking of the various protocols and processing tasks between the various processing elements.

Embodiments of the distributed control plane architecture (DCPA) have two modules that allow this distributed processing: the DCPA Infrastructure Module (DIM), and the DCPA Communications Library (DCL). The control plane and/or the forwarding planes that execute a DIM along with one or multiple routing or signaling protocols functions is referred to here as a control point. The DIM also contains the logic required by a control point to discover other control points present in a system, establish connectivity with them and exchange information about their capabilities. The DIM may also be configured with a policy or policies that determine the control points with which it will communicate.

The DIM maintains the current view of the network device, keeping track of the capabilities and resources of other control points in the network element and the Control Plane Protocol Modules (CPPMs) running on each of them. A CPPM is a protocol implementation that executes a singe function or the complete functionality of a protocol in accordance with a standard, such as an industry standard or an Internet Engineering Task Force (IETF) request for comments (RFC). Multiple CPPMs work in conjunction to provide a complete implementation of the protocol. The functionality may be split into a core functionality, more than likely executed by the control plane, referred to as a Controller CPPM, and a portion separated from the core functionality, referred to as a Worker CPPM.

The DCL is linked with the CPPMs and is responsible for providing communication between them. Abstraction of the CPPMs for communication purposes is provided to them by the transport abstraction. The peer CPPM information is provided by the DIM. Generally, the DIM and the CPPM will run in different processes and communicate via an interprocess communication.

For example, assume a protocol such as Open Shortest Path First (OSPF) was distributed with the OSPF controller CPPM running on the control plane and two OSPF worker CPPMs on the forwarding plane. The OSPF controller would consider the 2 workers as peer CPPMs. The common interface between the peer CPPMs is known as the CPPM Peer Interface.

Figure 3 shows an embodiment of two control points in a distributed control point architecture. In this particular embodiment, control point 1 is a control plane and control point 2 is a forwarding plane. These are merely designated for this example and no limitation is intended by this configuration. Control point 1, 40, has the DIM 42 and the DCL 44. The DCL is linked to the controller CPPM 46. While only one controller CPPM is shown, there will be a controller CPPM for each protocol being executed by the control point.

Turning to the DIM, it can be seen that the DIM is made up of a namespace 423, a binding and discovery module 422, the CPPM registration (CR) module 425, a packet redirection module (PR) 426, APIs 424 and a transport module 421. The namespace 423 maintains a logical view of the network element and its components. Various modules register with the namespace to receive notification of particular events when there are changes to the namespace. For example, a OSPF CPPM may register with the namespace to be notified if any other control points introduce another OSPF CPPM. When the new CPPM registers with the namespace, the existing CPPM is notified.

The binding and discovery module 422 discovers other control points and exchanges configuration information with them. The information may include properties of the control points and the capabilities of any CPPMs running on those control points. When the information is exchanged, the binding and discovery module then updates the information, or binding, in the namespace.

The CPPM Registration module (CR) 425 allows a CPPM to register its capabilities and get information about its peers. A CPPM uses the packet redirection module 426 to specify the protocol packets of interest to itself. For example, a worker CPPM may be executing part of the Open Shortest Path First (OSPF) protocol. If an update to the OSPF configuration comes in, this packet would be re-directed to the CPPM registered for it. If no such redirection were specified, the controller CPPM would receive all protocol packets by default.

One example of the interface that receives and routes packets may be found in copending US Patent Application No. 10/714,412, filed November 13, 2003, "Implementation Of Control Plane Protocols And Networking Stacks In A Distributed Network Device", published as US 2005/0108315. Other methods of providing this interface could also be used, but this provides an example of one.

The APIs 424 provide a standardized interface to control protocol stacks. A protocol stack is a stack of network layers that work together. An example of a control protocol would be OSPF (Open Shortest Path First). Typically, these APIs would be standardized to match those defined by the Network Processing Forum (NPF).

The transport module 421 is responsible for communication between the DIMs. It hides the specifics of the physical interconnection and associated transport protocols used to exchange information between them. It provides a connection-oriented interface to set up connections and transfer data between any two DIMs in the system and takes care of managing the underlying transport protocols and interconnects. This transport module should be a 'plug-in,' such that it can be changed and updated without affecting any of the other modules. New plug-ins can be easily added to support additional interconnects and associated transport protocols.

The DIMs between the control plane control point 1 and the forwarding plane control point 2 are substantially the same. The DIMs exchange information about the CPPMs running on them. The DCLs 44 and 54 communicate with the DIMs 42 and 52, respectively, to discover peer CPPMs and provide abstractions of the peer CPPMs to the local CPPM. In control point 2 50, the CPPM 56 is local to the DCL 54 and the controller CPPM 46 is local to the DCL 44. The interface between the control and worker CPPMs is through the peer CCPM API 443.

The DCL provides an abstraction of the peer CPPMs in the form of the resources they own or control. The abstraction refers to the ability of the DCL to make the distribution transparent to the CPPMs. Using the OSPF controller and worker CPPMs above, the DCL uses the resource information to access connection information. This information is in turn used to send messages to the appropriate OSPF worker CPPMs. The OSPF controller 'believes' that it is communicating directly with the OSPF worker, making the distribution transparent.

The DCP messaging layer 442 controls the actual communication between the CCPMs across the peer CCPM interface. It provides functions to serialize and de-serialize data and transparently exchange it between the associated CPPMs across the network. The messaging layer uses information from the CPPM Registration module in the DIM to set up and manage communication channels between the associated CCPMs. The messaging layer detects CPPM and connection failures and is informed of changes in the configuration of peer CPPMs via events from the DIM. The DCL can implement load balancing, redundancy and dynamic failover, if those policies are configured.

The messaging layer relies upon the transport abstraction layer 441 to set up, manage communications and provide interconnect/transport independent communications. The abstraction again 'hides' the details of the interconnect and transport protocols. This allows for easy integration with existing protocol stacks.

Using the DIM and DCL components to manage control plane processing in devices, it is now possible for a device to handle increased control traffic without overwhelming the control plane. Portions of the control plane processing for a particular protocol can be off-loaded from the control plane to the forwarding planes, independent of protocols and interconnections used, as well as ease of adding new protocols and scaling to multiple processor resources.

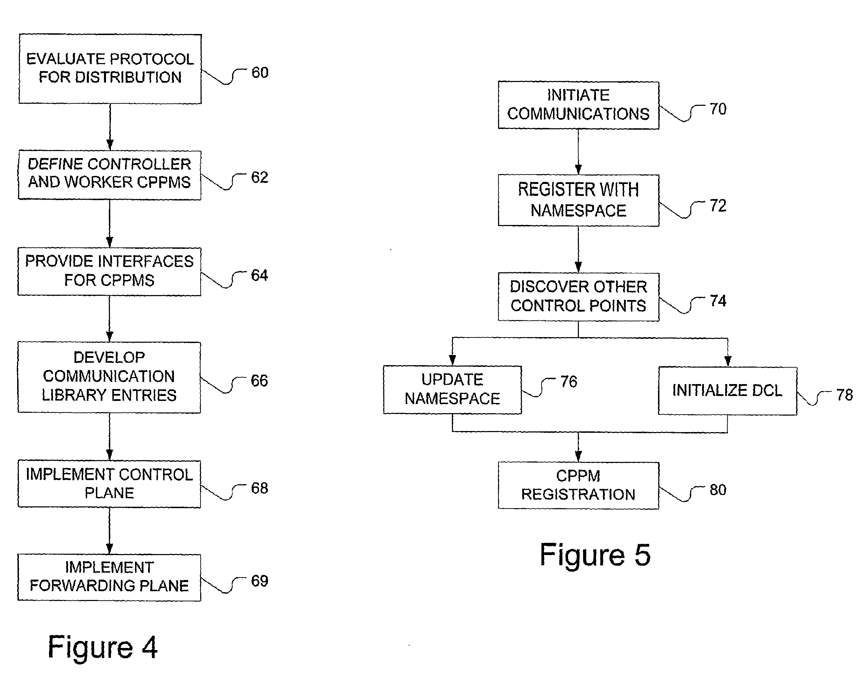

This architecture allows the system designers to consider distribution control processing for protocols. An embodiment of this process is shown in Figure 4. During evaluation of the protocol for distribution at 60, there are typically 2 issues to be considered: what to distribute; and where to distribute.

Control protocols may be classified in many different ways. For the discussion here, they will be split into three categories: link-specific functions involving packet forwarding and maintenance of connectivity with protocol peers; protocol-specific processing such as maintaining the protocol state machine; and functions that update the forwarding plane with control information. Link-specific functions generally involve parts of a protocol responsible for communication with peers to maintain adjacency and status of the connectivity, and processing of packets on a per interface basis. These functions are ideal candidates for distribution to on-line cards. This reduces the computation load on the control processor(s) and bandwidth load on the interconnect fabric, as well as accelerating peer discovery and failure detection.

Protocol-specific functions are typically related to computation, based upon updates received from the protocol peers to generate new peer updates and new control information, such as new IP routes for installation in the forwarding plane. The protocol state machine maintenance functions are included in this category. These functions could be considered for distribution on a case-by-case basis, with the focus being on reducing the computational load on the control processor when network failures cause additional message traffic.

Forwarding plane update or centralized functions consist of updates to refresh the control information in the forwarding plane. An example may include routing table updates as information comes in from adjacent devices about link failures or additions to the network. These functions can rarely be distributed.

For the functions that can be distributed, the DCPA manages the distribution and communication between the control processors and the forwarding plane processors. Returning to Figure 4, after a protocol has been selected for distribution, the protocol must be portioned out amongst the processing entities. In the DCPA, this would be accomplished by defining the control and worker Control Plane Processing Modules, mentioned earlier, at 62. The interfaces are then provided at 64 between the control CPPM and the worker CPPM to allow them to communicate about the protocol processing they are performing.

Once the interfaces are provided, the communications library entries, such as the code that allows the interfaces to operate, is defined at 66. The code or other implementation of the DIM, the DCL and the controller CPPM is then integrated onto the control card at 68 and the forwarding plane at 69. Generally, the embodiments of this invention will take the form of machine-readable code that, when executed, cause the machine to distribute the processing tasks as discussed above. The machine in this context is the control plane processor or processors and the forwarding plane processors.

Once the control plane and forwarding planes are established, the network device can initiate communication with other network devices. An embodiment of this establishment is shown in Figure 5. Communications are initiated at 70. The controller components register with the namespace at 72 for the appropriate events, and the DIM discovers other control points at 74. The namespace is updated at 76 as each control point is discovered and the communications library is similarly initiated at 78. Finally, the CPPMs register with the CPPM at 80.

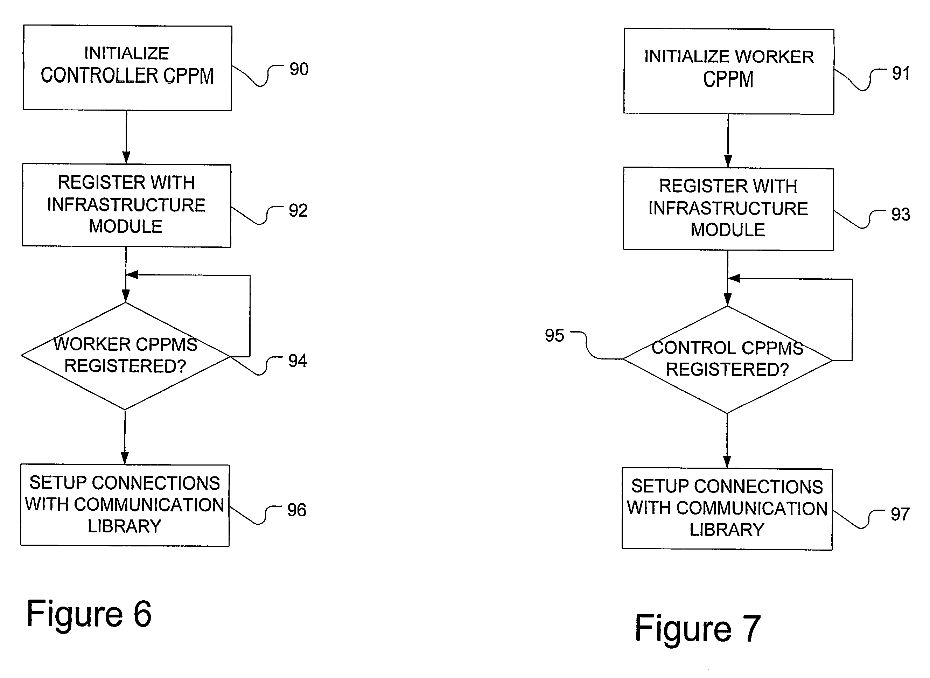

Within that process, the CPPMs initialize and set themselves up, such as in the embodiments of Figure 6 and 7. In Figure 6, a process for initial connection establishment for a controller CPPM is shown. When the control card initialized, such as on boot up, at 90, the control card registers with the DIM at 92. At 94, the controller CPPM waits until worker CPPM register. When a worker CPPM registers, the DCL sets up the connection between the worker and controller CPPM at 96.

Figure 7 shows the similar process for the worker CPPM. The worker CPPM is initialized at 91. It registers at 93 with the DIM. If the controller CPPM has not registered yet, the worker CPPM waits at 95. Once the controller CPPM has registered, the DCL sets up the control connections for the worker CPPM and the controller CPPM at 97.

In this manner, a generic software architecture is provided that can be used to distribute the functionality of complex control plane protocols between different processing elements in network elements. This architecture provides scalability, high availability and robustness without significantly increasing the cost of the network element. The architecture distributes and scales the control plane protocol functionality across different processing elements/resources in the system or network element without any major re-design of the control protocol. It is independent of the control plane protocol and backplane interconnect technology, supports multiple processor hierarchies in the system and provides well-defined interfaces that allow new protocol implementations to be easily added into the system.

Thus, although there has been described to this point a particular embodiment for a method and apparatus for establishing a distributed control plane architecture, it is not intended that such specific references be considered as limitations upon the scope of this invention except in-so-far as set forth in the following claims.

## Claims

1. A control point (40,50) of a network device (10), comprising:
a control plane (20) operable to execute a control plane protocol module for executing a functionality of a protocol;
said control point **characterised by** comprising
an infrastructure module (42,52) having means (423) for maintaining a logical view of a plurality of control points of the network device, and means (422) for discovering other control points of the network device and for exchanging information with the other control points; and
a communication library (44,54) including means for providing information to the control point about control plane protocol modules on the plurality of control points of the network device.

2. The control point of claim 1, wherein the protocol is split into a core functionality and a portion separated from the core functionality, and wherein the control plane protocol module further comprises a worker control plane protocol module for executing the portion separated from the core functionality.

3. The control point of claim 1, wherein the protocol is split into a core functionality and a portion separated from the core functionality, and wherein the control plane protocol module further comprises a controller control plane protocol module for executing the core functionality.

4. The control point of claim 1, the infrastructure module (42,52) further comprising a standardized application programming interface.

5. The control point of claim 4, wherein the application programming interface is a Network Processing Forum application programming interface.

6. The control point of claim 1, wherein the means for maintaining a logical view of the plurality of control points comprises a namespace (423) operable to allow registration of components of the infrastructure module (42,52).

7. The control point of claim 1, the infrastructure module (42,52) further comprising a control plane protocol module registration module and a packet redirection module.

8. The control point of claim 1, the infrastructure module (42,52) further comprising a transport module (422) for communicating with other infrastructure modules on other network devices.

9. The control point of claim 1, the communication library further comprising a peer control plane protocol module application programming interface.

10. The control point of claim 1, wherein the communication library comprises a messaging layer (442) for controlling communication between the plurality of control plane protocol modules on the plurality of control points of the network device.

11. The control point of claim 1, wherein the communication library comprises a transport abstraction layer (441) for setting up and managing communication between the plurality of control plane protocol modules on the plurality of control points of the network device, and to handle interconnection and transport protocols to provide interconnect and transport independent communications.

12. A system, comprising:
a control point of a network device, as set out in any one of claims 1 to 11;
at least one forwarding plane having a forwarding plane processor, the forwarding plane arranged to manage the connectivity between the control plane and the forwarding plane; and
a backplane to provide connectivity between the control plane and the forwarding plane.

13. The system of claim 12, the system further comprising a communication library resident on the control plane and the forwarding plane to communicate with the infrastructure module to obtain information about control plane protocol modules and to setup connections with the control plane protocol modules.

14. The system of claim 12, wherein the forwarding plane further comprises a worker control plane protocol module.

15. A method of distributing processing in a network device including a plurality of control points (40,50), at least one of which being as set out in any of claim 1 to 11, the method comprising:
maintaining a logical view of the plurality of control points of the network device,
exchanging information between the plurality of control points; and
providing information to the at least one control point about control plane protocol modules on the plurality of control points of the network device.

16. An article of machine readable instructions that, when executed, cause the machine to become configured as a control point of a network device, as set out in any one of claims 1 to 11.

## Patentansprüche

1. Ein Steuerpunkt (40, 50) einer Netzwerkvorrichtung (10) umfassend:
eine Steuerebene (20) die betreibbar ist, um ein Steuerebenenprotokollmodul für das Ausführen einer Funktionalität eines Protokolls auszuführen;
wobei der Steuerpunkt **dadurch gekennzeichnet ist, dass** er Folgendes umfasst:
ein Infrastrukturmodul (42, 52) das Mittel (423) zum Verwalten einer logischen Ansicht mehrerer Steuerpunkte der Netzwerkvorrichtung und Mittel (422) zum Ermitteln anderer Steuerpunkte der Netzwerkvorrichtung und für den Austausch von Informationen mit anderen Steuerpunkten hat; und
eine Kommunikationsbibliothek (44, 54) umfassend Mittel zum Bereitstellen von Informationen für den Steuerpunkt über Steuerebenenprotokollmodule auf den mehreren Steuerpunkten der Netzwerkvorrichtung.

2. Der Steuerpunkt nach Anspruch 1, wobei das Protokoll in eine Kernfunktionalität und einen von der Kernfunktionalität getrennten Bestandteil aufgeteilt ist, und wobei das Steuerebenenprotokollmodul ferner ein Worker-Steuerebenenprotokollmodul zum Ausführen des von der Kernfunktionalität getrennten Bestandteils umfasst.

3. Der Steuerpunkt nach Anspruch 1, wobei das Protokoll in eine Kernfunktionalität und einen von der Kernfunktionalität getrennten Bestandteil aufgeteilt ist, und wobei das Steuerebenenprotokollmodul ferner ein Controller-Steuerebenenprotokollmodul zum Ausführen der Kernfunktionalität umfasst.

4. Der Steuerpunkt nach Anspruch 1, wobei das Infrastrukturmodul (42, 52) ferner eine standardisierte Programmierschnittstelle umfasst.

5. Der Steuerpunkt nach Anspruch 4, wobei die Programmierschnittstelle eine Network Processing Forum-Programmierschnittstelle ist.

6. Der Steuerpunkt nach Anspruch 1, wobei das Mittel für die Verwaltung einer logischen Ansicht der mehreren Steuerpunkte einen Namensraum (423) umfasst, der betreibbar ist, um eine Registrierung von Komponenten des Infrastrukturmoduls (42, 52) zu ermöglichen.

7. Der Steuerpunkt nach Anspruch 1, wobei das Infrastrukturmodul (42, 52) ferner ein Registrierungsmodul für das Steuerebenenprotokollmodul und ein Paket-Umleitungsmodul umfasst.

8. Der Steuerpunkt nach Anspruch 1, wobei das Infrastrukturmodul (42, 52) ferner ein Transportmodul (422) für die Kommunikation mit anderen Infrastrukturmodulen auf anderen Netzwerkvorrichtungen umfasst.

9. Der Steuerpunkt nach Anspruch 1, wobei die Kommunikationsbibliothek ferner eine gleichrangige Programmierschnittstelle für das Steuerebenenprotokollmodul umfasst.

10. Der Steuerpunkt nach Anspruch 1, wobei die Kommunikationsbibliothek eine Datentransferschicht (442) für die Steuerung der Kommunikation zwischen den mehreren Steuerebenenprotokollmodulen auf den mehreren Kontrollpunkten der Netzwerkvorrichtung umfasst.

11. Der Steuerpunkt nach Anspruch 1, wobei die Kommunikationsbibliothek eine Transportabstraktionsschicht (441) zum Einrichten und Verwalten der Kommunikation zwischen den mehreren Steuerebenenprotokollmodulen auf den mehreren Kontrollpunkten der Netzwerkvorrichtung sowie zum Steuern von Verbindungs- und Transportprotokollen umfasst, um verbindungs- und transportunabhängige Kommunikation bereitzustellen.

12. Ein System umfassend:
einen Steuerpunkt einer Netzwerkvorrichtung, wie in einem der Ansprüche 1 bis 11 ausgeführt;
mindestens eine Weiterleitungsebene, die einen Weiterleitungsebenenprozessor hat, wobei die Weiterleitungsebene so angeordnet ist, um die Konnektivität zwischen der Steuerungsebene und der Weiterleitungsebene zu verwalten; und
eine Rückwandplatine, um Konnektivität zwischen der Steuerungsebene und der Weiterleitungsebene bereitzustellen.

13. Das System nach Anspruch 12, wobei das System ferner eine Kommunikationsbibliothek umfasst, die sich auf der Steuerebene und der Weiterleitungsebene befindet, um mit dem Infrastrukturmodul zu kommunizieren, um Informationen über Steuerebenenprotokollmodule zu erhalten und um Verbindungen mit den Steuerebenenprotokollmodulen einzurichten.

14. Das System nach Anspruch 12, wobei die Weiterleitungsebene ferner ein Worker-Steuerebenenprotokollmodul umfasst.

15. Ein Verfahren zum Verteilen der Verarbeitung in einer Netzwerkvorrichtung umfassend mehrere Steuerpunkte (40, 50), von denen mindestens einer so ist wie in einem der Ansprüche 1 bis 11 ausgeführt, wobei das Verfahren Folgendes umfasst:
das Verwalten einer logischen Ansicht der mehreren Steuerpunkte der Netzwerkvorrichtung,
das Austauschen von Informationen zwischen den mehreren Steuerpunkten; und
das Bereitstellen von Informationen für mindestens den einen Steuerpunkt über Steuerebenenprotokollmodule auf den mehreren Steuerpunkten der Netzwerkvorrichtung.

16. Ein Artikel bestehend aus maschinenlesbaren Anweisungen, die, wenn sie ausgeführt werden, die Maschine dazu veranlassen, als Steuerpunkt einer Netzwerkvorrichtung konfiguriert zu werden, wie in einem der Ansprüche 1 bis 11 ausgeführt.

## Revendications

1. Point de commande (40, 50) d'un dispositif réseau (10), comprenant :
une carte de commande (20) utilisable pour exécuter un module de protocole de carte de commande pour exécuter une fonctionnalité d'un protocole ;
ledit point de commande étant **caractérisé en ce qu'**il comprend :
un module d'infrastructure (42, 52) ayant un moyen (423) pour maintenir une vue logique d'une pluralité de points de commande du dispositif de réseau, et un moyen (422) pour découvrir d'autres points de commande du dispositif de réseau et pour échanger des informations avec les autres points de commande ; et
une bibliothèque de communication (44, 54) comprenant un moyen pour fournir des informations au point de commande concernant des modules de protocole de carte de commande sur la pluralité de points de commande du dispositif réseau.

2. Point de commande selon la revendication 1, dans lequel le protocole est divisé en une fonctionnalité de coeur et une partie séparée de la fonctionnalité de coeur, et dans lequel le module de protocole de carte de commande comprend en outre un module de protocole de carte de commande ouvrière pour exécuter la partie séparée de la fonctionnalité de coeur.

3. Point de commande selon la revendication 1, dans lequel le protocole est divisé en une fonctionnalité de coeur et une partie séparée de la fonctionnalité de coeur, et dans lequel le module de protocole de carte de commande comprend en outre un module de protocole de carte de commande de dispositif de commande pour exécuter la fonctionnalité de coeur.

4. Point de commande selon la revendication 1, le module d'infrastructure (42, 42) comprenant en outre une interface de programmation d'application normalisée.

5. Point de commande selon la revendication 4, dans lequel l'interface de programmation d'application est une interface de programmation d'application de forum de traitement de réseau.

6. Point de commande selon la revendication 1, dans lequel le moyen pour maintenir une vue logique de la pluralité de points de commande comprend un espace de nom (423) utilisable pour permettre l'enregistrement des composants du module d'infrastructure (42, 52).

7. Point de commande selon la revendication 1, le module d'infrastructure (42, 52) comprenant en outre un module d'enregistrement de module de protocole de carte de commande et un module de redirection de paquet.

8. Point de commande selon la revendication 1, le module d'infrastructure (42, 52) comprenant en outre un module de transport (422) pour communiquer avec d'autres modules d'infrastructure sur d'autres dispositifs de réseau.

9. Point de commande selon la revendication 1, la bibliothèque de communication comprenant en outre une interface de programmation d'application de module de protocole de carte de commande d'homologue.

10. Point de commande selon la revendication 1, dans lequel la bibliothèque de communication comprend une couche de messagerie (442) pour commander la communication entre la pluralité de modules de protocole de carte de commande sur la pluralité de points de commande du dispositif de réseau.

11. Point de commande selon la revendication 1, dans lequel la bibliothèque de communication comprend une couche d'abstraction de transport (441) pour régler et gérer une communication entre la pluralité de modules de protocole de carte de commande sur la pluralité de points de commande du dispositif réseau, et pour gérer des protocoles d'interconnexion et de transport pour fournir des communications indépendantes de l'interconnexion et du transport.

12. Système comprenant :
un point de commande d'un dispositif réseau, comme exposé dans l'une quelconque des revendications 1 à 11 ;
au moins une carte d'envoi ayant un processeur de carte d'envoi, la carte d'envoi disposée pour gérer la connectivité entre la carte de commande et la carte d'envoi ; et
un fond de panier pour fournir la connectivité entre la carte de commande et la carte d'envoi.

13. Système selon la revendication 12, le système comprenant en outre une bibliothèque de communication résidante sur la carte de commande et la carte d'envoi pour communiquer avec le module d'infrastructure pour obtenir des informations concernant des modules de protocole de carte de commande et pour établir des connexions avec les modules de protocole de carte de commande.

14. Système selon la revendication 12, dans lequel la carte d'envoi comprend en outre un module de protocole de carte de commande ouvrière.

15. Procédé de distribution de traitement dans un dispositif de réseau comprenant une pluralité de points de commande (40, 50), dont au moins un est comme exposé dans une quelconque des revendications 1 à 11, le procédé comprenant :
le maintien d'une vue logique de la pluralité de points de commande du dispositif de réseau,
l'échange d'informations entre la pluralité de points de commande ; et
la fourniture d'informations à ledit au moins un point de commande concernant des modules de protocole de carte de commande sur la pluralité de points de commande du dispositif réseau.

16. Article d'instructions lisibles par machine qui, lorsqu'il est exécuté, conduit la machine à devenir configurée comme un point de commande d'un dispositif de réseau, comme exposé selon l'une quelconque des revendications 1 à 11.
